# FASCICULE DE BREVET EUROPEEN

(11) **EP 3 311 116 B1**
(45) Date de publication et mention de la délivrance du brevet: **07.08.2019**
(21) Numéro de dépôt: 16733020.8
(22) Date de dépôt: 17.06.2016
(51) Int. Cl.: G01D 5/26, G01D 21/00

(54) **TRANSMISSION D'INFORMATIONS ET D'ÉNERGIE ENTRE UN CAPTEUR MOBILE ET UN ÉLÉMENT FIXE**
INFORMATIONS- UND ENERGIEÜBERTRAGUNG ZWISCHEN EINEM MOBILEN SENSOR UND EINEM STATIONÄREN ELEMENT
TRANSMISSION OF INFORMATION AND ENERGY BETWEEN A MOBILE SENSOR AND A STATIONARY ELEMENT

(30) Priorité: 17.06.2015 FR 1555537
(43) Date de publication de la demande: 25.04.2018
(73) Titulaire: BIA, 78700 Conflans Sainte Honorine (FR)
(72) Inventeur: NAMOUN, Fayçal, 92400 Courbevoie (FR)
(74) Mandataire: Collet, Alain
(86) Numéro de dépôt international: PCT/EP2016/064095
(87) Numéro de publication internationale: WO 2016/203026

(56) Documents cités:
- EP-A2- 0 324 349
- CA-A1- 2 574 780
- US-A- 5 119 679
- US-A1- 2008 221 825

## Description

L'invention concerne un équipement possédant plusieurs éléments susceptible de se déplacer les uns par rapport aux autres. On considère l'un des éléments comme fixe, c'est-à-dire un élément formant un référentiel. Ce référentiel peut lui aussi être mobile, comme par exemple le châssis d'un véhicule. Ce véhicule peut comprendre par exemple des bras articulés formant des éléments mobiles par rapport à l'élément fixe.

L'équipement peut comprendre des capteurs, permettant de déterminer le déplacement des éléments mobiles. Ces capteurs, comme par exemple des capteurs de position, de vitesse ou d'accélérations sont solidaires des éléments mobiles et doivent transmettre les informations mesurées vers l'élément fixe. D'autres types de capteurs, permettant de mesurer une grandeur physique particulière, peuvent également équiper les éléments mobiles. A titre d'exemple un bras articulé peut porter un capteur d'environnement, (température, pression...). Le déplacement du bras permet d'atteindre des zones particulières de l'espace.

Tous ces capteurs renvoient généralement l'information mesurée vers l'élément fixe de l'équipement pour y être traitée.

La solution la plus couramment employée pour la transmission d'information entre un capteur mobile et un élément fixe consiste à raccorder le capteur au moyen de câbles électriques. Une autre solution employée pour la transmission d'information entre un capteur mobile et un élément fixe consiste à raccorder le capteur avec un fibre optique à l'élément fixe comme décrit dans le document US2008/0221825. Les câbles électriques courent le long des éléments de liaison reliant l'élément fixe à l'élément mobile portant le capteur. Les câbles doivent traverser les articulations reliant les différents éléments entre eux.

Ces câbles risquent d'être endommagés lors de l'utilisation de l'équipement, par exemple par accrochage avec un objet extérieur. De plus, les câbles véhiculent souvent des signaux électriques de faible intensité, susceptibles d'être perturbés par l'environnement électromagnétique. Par exemple les capteurs de type piézo-électriques délivrent des signaux particulièrement faibles. Les câbles associés à ces capteurs ne peuvent être de grande longueur sous peine de dégradation de l'information issue du capteur.

Dans le cas particulier d'un vérin où une tige se déplace en translation par rapport à un corps du vérin, il est courant de disposer sur la tige un capteur permettant de déterminer la position de la tige par rapport au corps. Le capteur est raccordé par un câble au corps du vérin. Les vérins classiques sont à symétrie de révolution et la tige reste libre en rotation autour de l'axe de translation du vérin. Cette liberté en rotation peut nuire au câble qui risque de s'entortiller autour de la tige. On est alors tenu de prévoir un dispositif anti rotation de la tige, ce qui complique inutilement le vérin.

On a également envisagé de prévoir une liaison sans fil, par exemple par voie hertzienne, entre le capteur et l'élément fixe. Ce type de liaison convient aux données issues du capteur, mais reste sujette aux interférences électromagnétiques. De plus, l'alimentation en énergie du capteur n'est pas assurée. Il est alors nécessaire de prévoir une batterie solidaire du capteur pour l'alimenter. Cette batterie doit avoir une autonomie suffisante pour assurer le fonctionnement du capteur et la transmission d'informations vers l'élément fixe. Il est de plus nécessaire de prévoir périodiquement le rechargement de la batterie ou son remplacement, ce qui entraîne une augmentation du coût de fonctionnement de l'équipement.

L'invention vise à pallier tout ou partie des problèmes cités plus haut en proposant un équipement possédant au moins un capteur relié sans fil aussi bien pour la transmission d'information que pour son alimentation.

A cet effet, l'invention a pour objet un équipement comprenant un élément fixe, un élément mobile, un capteur de mesure physique solidaire de l'élément mobile et une liaison permettant une transmission d'informations entre le capteur et l'élément fixe, le capteur générant un signal primaire représentatif de la mesure physique. Selon l'invention, l'équipement comprend en outre un convertisseur du signal primaire en un signal lumineux. Le convertisseur est solidaire de l'élément mobile. La liaison est un chemin optique. Le signal lumineux se propage librement entre l'élément fixe et l'élément mobile le long du chemin optique. Le capteur comprend un module d'alimentation recevant de l'énergie de l'élément fixe sans contact.

Le fait d'utiliser un mode de propagation libre sur la totalité du chemin optique permet de se passer de tout câblage de conducteurs électriques ou de fibres optiques.

Avantageusement, le chemin optique est entièrement situé à l'intérieur d'une peau opaque de l'équipement.

La liaison peut être configurée pour permettre une transmission monodirectionnelle ou bidirectionnelle d'informations entre le capteur et l'élément fixe.

Le capteur peut comprendre une cellule photovoltaïque reliée au module d'alimentation. L'équipement peut comprendre un émetteur de lumière solidaire de l'élément fixe et disposé de façon à émettre de la lumière en direction de la cellule photovoltaïque selon une propagation libre. L'énergie reçue par la cellule photovoltaïque est transmise au module d'alimentation afin d'alimenter le capteur. Ici encore le mode de propagation libre permet de se passer de tout câblage.

Avantageusement, la transmission d'énergie électrique entre l'émetteur de lumière et la cellule photovoltaïque utilise le chemin optique.

Alternativement, le capteur peut comprendre un enroulement induit relié au module d'alimentation. L'équipement peut comprendre un enroulement inducteur solidaire de l'élément fixe. Dans une position particulière de l'élément fixe et de l'élément mobile, les enroulements inducteur et induit sont suffisamment proches l'un de l'autre pour échanger une quantité d'énergie suffisante pour alimenter le capteur.

Dans une variante particulière de l'invention, l'équipement comprend un vérin. L'élément fixe forme un corps du vérin et l'élément mobile forme une tige du vérin. Le chemin optique est disposé dans la tige du vérin.

Dans cette variante particulière et le cas d'une alimentation par induction, la position particulière est une des positions extrême du vérin.

L'invention sera mieux comprise et d'autres avantages apparaîtront à la lecture de la description détaillée d'un mode de réalisation donné à titre d'exemple, description illustrée par le dessin joint dans lequel :
la figure 1 représente un équipement conforme à l'invention ;
les figures 2a et 2b représentent schématiquement un chemin optique mis en oeuvre dans l'équipement de la figure 1.
les figures 3a et 3b représentent une application particulière de l'invention à un vérin linéaire.

Par souci de clarté, les mêmes éléments porteront les mêmes repères dans les différentes figures.

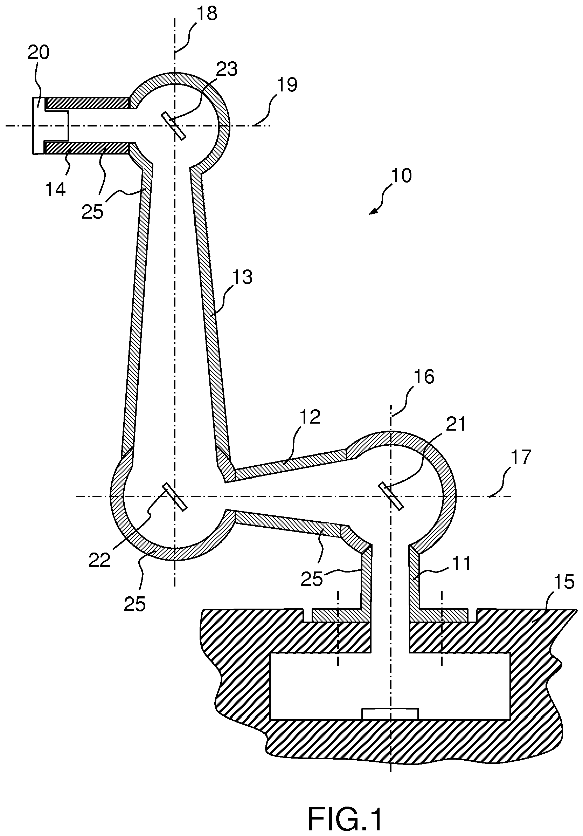

La figure 1 représente en coupe partielle un équipement tel que par exemple un bras robotisé 10. Le bras 10 comprend plusieurs segments 11, 12, 13 et 14 articulés entre eux. Le segment 11 est solidaire d'un support 15 du bras 10. Le support est considéré comme un élément fixe. Le segment 11 s'étend principalement selon un axe 16. Le bras 12 s'étend selon un axe 17. Le bras 12 est mobile en rotation par rapport au segment 11 autour de l'axe 17. De même, le segment 13 s'étend autour d'un axe 18 et est mobile en rotation autour de l'axe 18 par rapport au segment 12. Enfin le segment 14 s'étend autour d'un axe 19 et est mobile en rotation autour de l'axe 19 par rapport au segment 13. Un capteur 20 est fixé au segment 14. La structure du bras 10 n'est donnée qu'à titre d'exemple. Les différentes rotations sont motorisées et les différents actionneurs permettant ces rotations ne sont pas représentés pour ne pas alourdir la figure. De même, le bras 10 peut remplir d'autres fonctions que celle de porter le capteur 20, comme par exemple une fonction mécanique de préhension d'objets, au moyen d'une pince fixée au segment 14.

L'invention peut être mise en oeuvre quelque soit le nombre de segments et quelque soit le type d'articulation. Il est possible de prévoir des mouvements de rotation et/ou des mouvements de translation.

Le capteur 20 permet la mesure d'une grandeur physique, comme par exemple la température ou la pression, en extrémité du segment 14, le déplacement, la vitesse ou l'accélération de l'extrémité du segment 20. De façon plus générale, l'invention peut être mise en oeuvre pour tout type de mesure physique.

Le capteur 20 transmet un signal représentatif de la mesure physique qu'il réalise. Afin de se passer de câblage entre le segment 14 et le support 15, le signal est transmis de façon optique entre le capteur 20 et le support 15 en utilisant un mode de propagation libre, c'est-à-dire non guidé comme dans une fibre optique. A cet effet, le bras 10 est configuré pour prévoir un chemin optique non guidé entre le capteur 20 et le support 15. Dans l'exemple représenté, le chemin optique suit les axes 19, 18, 17 et 16. Au niveau de chaque articulation, le chemin optique comprend un miroir permettant de réaliser un renvoi d'angle du chemin optique. Plus précisément, un miroir 21 modifie la direction du chemin otique entre l'axe 16 et l'axe 17, un miroir 22 modifie la direction du chemin otique entre l'axe 17 et l'axe 18 et un miroir 23 modifie la direction du chemin otique entre l'axe 18 et l'axe 19. Il est bien entendu que le nombre de miroirs est fonction du nombre d'articulations et de leurs degrés de liberté respectifs. Pour un mouvement de translation, aucun miroir n'est a priori nécessaire.

Avantageusement, le chemin optique utilisé pour la transmission du signal entre le capteur 20 et le support 15 est entièrement situé à l'intérieur du bras 10. Autrement dit le bras 10 comprend une peau opaque 25 et le chemin optique est entièrement situé dans la peau 25. Cela permet d'isoler le rayonnement lumineux utilisé pour la transmission du signal de lumières parasites provenant de l'environnement extérieur au bras 10.

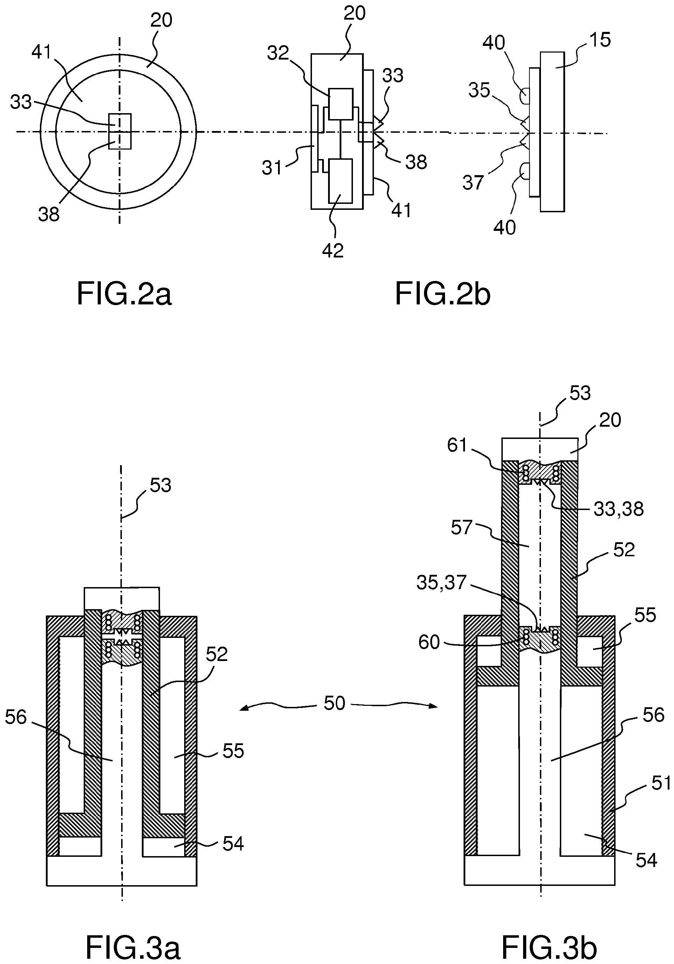

Les figures 2a et 2b représentent schématiquement le chemin optique mis en oeuvre dans le bras 10. Pour simplifier, les miroirs ne sont pas représentés. La figure 2a représente le capteur 20 perpendiculairement au chemin optique et la figure 2b représente le capteur 20 et le support 15 de profil. Le chemin otique est contenu dans le plan de la figure 2b.

Le capteur 20 comprend une cellule 31 sensible à la grandeur physique à mesurer. Il peut d'agir par exemple d'un thermocouple pour une mesure de température, une cellule piézo-électrique pour une mesure de pression ou de force, un accéléromètre... Pour assurer la transmission du signal représentatif de la grandeur physique entre le capteur 20 et le support 15, le capteur 20 comprend un module 32 de traitement du signal et un émetteur lumineux 33. Le module 32 est raccordé à la cellule 31 et à l'émetteur 33. Le module 32 et l'émetteur 33 forment un convertisseur du signal, appelé signal primaire, issu de la cellule 31 en un signal lumineux. La cellule 31, le module 32 et l'émetteur 33 sont fixés les uns aux autres. Autrement dit lors des mouvements du bras 10, les différents composants du capteur 20 sont immobiles les uns par rapport aux autres. Le signal primaire peut être un signal électrique analogique et le signal lumineux peut moduler l'intensité de la lumière émise par l'émetteur 33 également de façon analogique ou de façon numérique.

Le support 15 comprend un récepteur 35 disposé sur le chemin optique de façon à recevoir le signal lumineux issu de l'émetteur 33. Un traitement du signal lumineux reçu par le récepteur 35 est prévu dans le support 15. Pour ne pas alourdir la figure, ce traitement n'est pas représenté.

La transmission du signal lumineux entre le capteur 20 et le support 15 peut être monodirectionnelle, de l'émetteur 33 vers le récepteur 35. On peut également prévoir une transmission bidirectionnelle, par exemple afin d'étalonner le capteur 20 ou de vérifier son bon fonctionnement. A cet effet, le support 15 comprend un émetteur lumineux 37 et le capteur 20 comprend un récepteur lumineux 38. L'émetteur 37 et le récepteur 38 sont également disposés sur le chemin optique reliant le capteur 20 et le support 15.

Pour alimenter le capteur 20 en énergie, il est possible de transmettre sans contact de l'énergie du support 15 vers le capteur 20, par exemple sous forme d'un faisceau lumineux. A cet effet, le support 15 comprend un émetteur de lumière 40 et le capteur 20 comprend une cellule photovoltaïque 41 reliée à un module d'alimentation 42 du capteur 20. L'émetteur 40 et la cellule photovoltaïque 41 sont avantageusement situés sur le même chemin optique que celui utilisé pour la transmission des signaux. La transmission d'énergie entre le support 15 et le capteur 20 utilise un mode de propagation libre sur la totalité du chemin optique comme pour la transmission d'informations. On bénéficie de la présence des éventuels mêmes miroirs que ceux utilisés pour la ou les transmissions de signaux. Alternativement, pour l'alimentation du capteur 20, il est possible d'utiliser un second chemin optique distinct du chemin utilisé pour la transmission des signaux. L'émetteur de lumière 40 peut comprendre une ou plusieurs diodes électroluminescentes de puissance entourant le récepteur 35 et l'émetteur 37. Il est également possible de d'utiliser une même diode électroluminescente pour assurer les fonctions des deux émetteurs 37 et 40. La puissance lumineuse nécessaire à l'alimentation du capteur 20 est transmise au moyen d'une intensité lumineuse moyenne et le signal au moyen d'une modulation de cette intensité autour de l'intensité moyenne.

Coté capteur 20, la cellule photovoltaïque 41 est par exemple de forme circulaire. L'émetteur 33 et le récepteur 38 sont par exemple situés au centre de la cellule photovoltaïque 41.

Le module d'alimentation 42 reçoit l'énergie de la cellule photovoltaïque 41 et alimente la cellule 31 sensible à la grandeur physique à mesurer et le module 32 de traitement du signal. Il est possible d'alimenter en continue le capteur 20 lorsqu'il est en fonctionnement au moyen d'énergie transmise sous forme lumineuse. L'alimentation en continue permet de se passer de tout moyen de stockage d'énergie dans le capteur 20.

Sur les figures 3a et 3b, l'invention est mise en oeuvre dans un vérin linéaire 50 comprenant un corps 51 considéré comme fixe et une tige 52 mobile en translation par rapport au corps 51 selon un axe 53. Le mouvement du vérin 50 est assuré de façon classique par la pression d'un fluide dans une chambre 54 si le vérin est simple effet ou dans deux chambres 54 et 55 si le vérin est double effet. Un capteur 20 est disposé en extrémité de la tige 52. La figure 3a représente le vérin 50 dans une position où la tige 52 est rétractée au maximum et la figure 3b, le vérin 50 dans une position où la tige 52 est sortie au maximum.

La tige 52 est creuse selon l'axe 53 et le chemin optique permettant la transmission du ou des signaux de façon optique est situé à l'intérieur de la tige 52, ce qui protège le chemin otique de l'environnement extérieur, comme précédemment au moyen de la peau 25. Le corps 51 comprend un doigt 56 s'étendant selon l'axe 53 et pénétrant dans l'espace intérieur 57 de la tige 56. Le récepteur 35 et l'émetteur 37 sont disposés en extrémité du doigt 56 pour être visible optiquement de l'émetteur 33 et du récepteur 38 appartenant au capteur 20.

L'alimentation en énergie du capteur 20 peut être réalisée de la même façon que pour le bras 10 au moyen d'un émetteur 40 fixé à la tige 56 et d'une cellule photovoltaïque 41 fixée au capteur 20 en mettant en oeuvre un mode de propagation libre entre l'émetteur 40 et la cellule photovoltaïque 41.

Alternativement, il est possible d'alimenter le capteur 20 par induction lorsque la tige 52 est dans une de ses positions extrêmes, par exemple dans la position de la figure 3a. A cet effet, le doigt 56 comprend un enroulement inducteur 60 et le capteur 20 comprend un enroulement induit 61. Dans la position rétractée de la tige 52, (figure 3a) les enroulements 60 et 61 sont situés dans un voisinage immédiat de façon à pouvoir échanger une énergie suffisante à l'alimentation du capteur 20. Il est possible de considérer que la transmission d'énergie ente les deux enroulements 60 et 61 utilise un mode de propagation libre. Cette propagation se fait dans l'air sans élément ferromagnétique de guidage entre les deux enroulements 60 et 61. Il est bien entendu possible de prévoir un élément ferromagnétique dans chaque enroulement 60 et 61 mais pas entre eux.

L'enroulement inducteur 60 est alimenté en courant haute alternatif, par exemple à une fréquence de l'ordre de 20 à 100 kHz. Ce courant génère un autre courant dans l'enroulement induit 61. Le module d'alimentation 42 du capteur 20 reçoit ce courant induit pour adapter l'énergie qu'il transporte afin d'alimenter les différents composants du capteur 20. Pour assurer le fonctionnement du capteur 20 lorsque la tige 52 s'éloigne de la position rétractée, le module d'alimentation 42 comprend un moyen de stockage temporaire d'énergie, comme par exemple une batterie ou un condensateur.

Il est également possible de disposer les enroulements 60 et 61 de telle sorte qu'ils échangent une énergie substantielle lorsque la tige 52 est sortie du vérin, dans la position de la figure 3b. Le choix de la position du vérin 50 dans laquelle les enroulements 60 et 61 sont les plus proches est fait en fonction de l'utilisation du vérin, et notamment la position de la tige 52 la plus fréquente.

## Revendications

1. Equipement comprenant un élément fixe (15 ; 51), un élément mobile (14 ; 52), un capteur (20) de mesure physique solidaire de l'élément mobile (14 ; 52) et une liaison permettant une transmission d'informations entre le capteur (20) et l'élément fixe (15 ; 51), le capteur (20) générant un signal primaire représentatif de la mesure physique, l'équipement (10, 50) comprend en outre un convertisseur (32, 33) du signal primaire en un signal lumineux, le convertisseur (32, 33) étant solidaire de l'élément mobile (14 ; 52), la liaison est un chemin optique (16, 17, 18, 19 ; 53) le signal lumineux utilisant un mode de propagation libre entre l'élément fixe (15 ; 51) et l'élément mobile (14 ; 52) le long du chemin optique (16, 17, 18, 19; 53), le capteur (20) comprend un module d'alimentation (42) recevant de l'énergie de l'élément fixe sans contact.

2. Equipement selon la revendication 1, **caractérisé en ce que** le chemin optique (16, 17, 18, 19 ; 53) est entièrement situé à l'intérieur d'une peau opaque de l'équipement (10, 50).

3. Equipement selon l'une des revendications précédentes, **caractérisé en ce que** la liaison est configurée pour permettre une transmission bidirectionnelle d'informations entre le capteur (20) et l'élément fixe (15 ; 51).

4. Equipement selon l'une des revendications précédentes, **caractérisé en ce que** le capteur (20) comprend une cellule photovoltaïque (41) reliée au module d'alimentation (42) et **en ce que** l'équipement comprend un émetteur de lumière (40) solidaire de l'élément fixe (15 ; 51) et disposé de façon à émettre de la lumière en direction de la cellule photovoltaïque (41) selon une propagation libre.

5. Equipement selon la revendication 4, **caractérisé en ce que** la transmission d'énergie électrique entre l'émetteur de lumière (40) et la cellule photovoltaïque (41) utilise le chemin optique (16, 17, 18, 19 ; 53).

6. Equipement selon l'une des revendications 1 à 3, **caractérisé en ce que** le capteur (20) comprend un enroulement induit (61) relié au module d'alimentation (42), **en ce que** l'équipement comprend un enroulement inducteur (60) solidaire de l'élément fixe (15 ; 51), et **en ce que** dans une position particulière de l'élément fixe (15 ; 51) et de l'élément mobile (14 ; 52), les enroulements inducteur et induit (60, 61) sont suffisamment proches l'un de l'autre pour échanger une quantité d'énergie suffisante pour alimenter le capteur (20).

7. Equipement selon l'une des revendications précédentes, **caractérisé en ce qu'**il comprend un vérin (50), **en ce que** l'élément fixe forme un corps (51) du vérin (50), **en ce que** l'élément mobile forme une tige (52) du vérin (50) et **en ce que** le chemin optique (53) est disposé dans la tige (52) du vérin (50).

8. Equipement selon les revendications 6 et 7, **caractérisé en ce que** la position particulière est une des positions extrême du vérin (50).

9. Equipement selon l'une des revendications précédentes, **caractérisé en ce que** le signal lumineux utilise un mode de propagation libre sur la totalité du chemin optique (53).

10. Equipement selon l'une des revendications précédentes, **caractérisé en ce que** l'équipement comprend en outre au moins un actionneur permettant le mouvement de l'élément mobile (14 ; 52) par rapport à l'élément fixe (15 ; 51).

## Patentansprüche

1. Ausrüstung, welche ein stationäres Element (15; 51), ein mobiles Element (14; 52), einen physikalischen Messesensor (20), welcher fest mit dem mobilen Element (14; 52) verbunden ist und eine Verbindung beinhaltet, welche eine Informationsübertragung zwischen dem Sensor (20) und dem stationären Element (15; 51) ermöglicht, wobei der Sensor (20) ein Primärsignal erzeugt, welches die physikalische Messung darstellt,
wobei die Ausrüstung (10, 50) zudem einen Umwandler (32, 33) des Primärsignals in ein Lichtsignal beinhaltet, wobei der Umwandler (32, 33) fest mit dem mobilen Element (14; 52) verbunden ist, wobei die Verbindung ein Strahlengang (16, 17, 18, 19; 53) ist, wobei das Lichtsignal einen freien Fortpflanzungsmodus zwischen dem stationären Element (15; 51) und dem mobilen Element (14; 52) entlang des Strahlenganges (16, 17, 18, 19; 53) verwendet, wobei der Sensor (20) ein Speisungsmodul (42) beinhaltet, welches kontaktlos Energie vom stationären Element empfängt.

2. Ausrüstung nach Anspruch 1, **dadurch gekennzeichnet, dass** der Strahlengang (16, 17, 18, 19; 53) vollständig innerhalb einer lichtundurchlässigen Haut der Ausrüstung (10, 50) befindlich ist.

3. Ausrüstung nach einem der vorhergehenden Ansprüche, **dadurch gekennzeichnet, dass** die Verbindung konfiguriert ist, um eine bidirektionale Informationsübertragung zwischen dem Sensor (20) und dem stationären Element (15; 51) zu ermöglichen.

4. Ausrüstung nach einem der vorhergehenden Ansprüche, **dadurch gekennzeichnet, dass** der Sensor (20) eine Photovoltaikzelle (41) beinhaltet, welche mit dem Speisungsmodul (42) verbunden ist und dadurch, dass die Ausrüstung einen Lichtsender (40) beinhaltet, welcher fest mit dem stationären Element (15; 51) verbunden und so angeordnet ist, dass er Licht in Richtung der Photovoltaikzelle (41) gemäß einer freien Fortpflanzung aussendet.

5. Ausrüstung nach Anspruch 4, **dadurch gekennzeichnet, dass** die elektrische Energieübertragung zwischen dem Lichtsender (40) und der Photovoltaikzelle (41) den Strahlengang (16, 17, 18, 19; 53) verwendet.

6. Ausrüstung nach einem der Ansprüche 1 bis 3, **dadurch gekennzeichnet, dass** der Sensor (20) eine induzierte Wicklung (61) beinhaltet, welche mit dem Speisungsmodul (42) verbunden ist, dadurch, dass die Ausrüstung eine Induktorwicklung (60) beinhaltet, welche fest mit dem stationären Element (15; 51) verbunden ist und dadurch, dass in einer besonderen Position des stationären Elements (15; 51) und des mobilen Elements (14; 52) die Induktor- und die induzierte Wicklung (60, 61) nahe genug beisammen sind, um eine hinreichende Energiemenge auszutauschen, um den Sensor (20) zu speisen.

7. Ausrüstung nach einem der vorhergehenden Ansprüche, **dadurch gekennzeichnet, dass** sie einen Zylinder (50) beinhaltet, dadurch, dass das stationäre Element einen Körper (51) des Zylinders (50) bildet, dadurch, dass das mobile Element eine Stange (52) des Zylinders (50) bildet und dadurch, dass der Strahlengang (53) in der Stange (52) des Zylinders (50) angeordnet ist.

8. Ausrüstung nach den Ansprüchen 6 und 7, **dadurch gekennzeichnet, dass** die besondere Position eine der Endpositionen des Zylinders (50) ist.

9. Ausrüstung nach einem der vorhergehenden Ansprüche, **dadurch gekennzeichnet, dass** das Lichtsignal einen freien Fortpflanzungsmodus über die Gesamtheit des Strahlenganges (53) verwendet.

10. Ausrüstung nach einem der vorhergehenden Ansprüche, **dadurch gekennzeichnet, dass** die Ausrüstung zudem mindestens ein Stellglied beinhaltet, welches die Bewegung des mobilen Elements (14; 52) in Bezug auf das stationäre Element (15; 51) ermöglicht.

## Claims

1. An apparatus comprising a fixed element (15; 51), a mobile element (14; 52), a physical measurement sensor (20) secured to the mobile element (14; 52) and a link allowing a transmission of information between the sensor (20) and the fixed element (15; 51), the sensor (20) generating a primary signal representative of the physical measurement,
the apparatus (10, 50) further comprising a converter (32, 33) of the primary signal into a light signal, the converter (32, 33) being secured to the mobile element (14; 52), the link is an optical path (16, 17, 18, 19; 53), the light signal using a free propagation mode between the fixed element (15; 51) and the mobile element (14; 52) along the optical path (16, 17, 18, 19; 53), the sensor (20) comprises a power supply module (42) receiving energy from the fixed element without contact.

2. The apparatus as claimed in claim 1, **characterized in that** the optical path (16, 17, 18, 19; 53) is entirely situated within an opaque skin of the apparatus (10, 50).

3. The apparatus as claimed in one of the preceding claims, **characterized in that** the link is configured to allow a two-way transmission of information between the sensor (20) and the fixed element (15; 51).

4. The apparatus as claimed in one of the preceding claims, **characterized in that** the sensor (20) comprises a photovoltaic cell (41) linked to the power supply module (42) and **in that** the apparatus comprises a light emitter (40) secured to the fixed element (15; 51) and arranged so as to emit light toward the photovoltaic cell (41) according to a free propagation.

5. The apparatus as claimed in claim 4, **characterized in that** the transmission of electrical energy between the light emitter (40) and the photovoltaic cell (41) uses the optical path (16, 17, 18, 19; 53).

6. The apparatus as claimed in one of claims 1 to 3, **characterized in that** the sensor (20) comprises an armature winding (61) linked to the power supply module (42), **in that** the apparatus comprises a field winding (60) secured to the fixed element (15; 51), and **in that**, in a particular position of the fixed element (15; 51) and of the mobile element (14; 52), the field and armature windings (60, 61) are sufficiently close to one another to exchange a sufficient quantity of energy to power the sensor (20).

7. The apparatus as claimed in one of the preceding claims, **characterized in that** it comprises a cylinder (50), **in that** the fixed element forms a body (51) of the cylinder (50), **in that** the mobile element forms a stem (52) of the cylinder (50) and **in that** the optical path (53) is arranged in the stem (52) of the cylinder (50).

8. The apparatus as claimed in claims 6 and 7, **characterized in that** the particular position is one of the extreme positions of the cylinder (50).

9. The apparatus as claimed in one of the preceding claims, **characterized in that** the optical signal uses a free propagation mode over the entire optical path (53).

10. The apparatus as claimed in one of the preceding claims, **characterized in that** the apparatus further comprises at least one actuator allowing movement of the mobile element (14; 52) relative to the fixed element (15; 51).
